# FASCICULE DE BREVET EUROPEEN

(11) **EP 3 389 368 B1**
(45) Date de publication et mention de la délivrance du brevet: **27.01.2021**
(21) Numéro de dépôt: 16825859.8
(22) Date de dépôt: 15.12.2016
(51) Int. Cl.: A01K 5/00, A01K 5/01, A01K 5/02

(54) **APPAREIL DE PRÉPARATION D'ALIMENTS POUR ANIMAUX**
GERÄT ZUR VORBEREITUNG VON HAUSTIERFUTTER
APPARATUS FOR PREPARATION OF PET FOOD

(30) Priorité: 16.12.2015 FR 1562559
(43) Date de publication de la demande: 24.10.2018
(73) Titulaire: SEB S.A., 69130 Ecully (FR)
(72) Inventeur: MORIN, Gilles, 21490 Varois et Chaignot (FR); GOYON, Annabelle, 30980 Saint-Dionisy (FR)
(74) Mandataire: SEB Développement
(86) Numéro de dépôt international: PCT/FR2016/053476
(87) Numéro de publication internationale: WO 2017/103507

(56) Documents cités:
- FR-A1- 2 386 271
- US-A- 3 547 081
- US-A- 3 920 224
- US-A- 4 665 862
- US-A- 5 340 211
- US-A1- 2009 173 282

## Description

La présente invention concerne de manière générale un appareil domestique destiné à préparer des aliments pour animaux.

Il est connu dans l'art antérieur des dispositifs de préparation d'aliment pour animaux domestiques, tel que celui décrit par exemple dans le document US8511519B2. Ce système présente notamment l'inconvénient de ne proposer que des aliments sous forme solide, ce qui peut ne pas convenir à certains animaux. D'autres dispositifs sont connus des documents FR2386271, US3547081 ou encore US5340211. On peut encore mentionner les documents US 2009/173282A1 et US4665862A.

Un but de la présente invention est de répondre aux inconvénients du document de l'art antérieur mentionné ci-dessus et en particulier, tout d'abord, de proposer un appareil de préparation d'aliments pour animaux domestiques, adapté pour préparer une ration alimentaire appétissante.

Pour cela l'invention concerne un appareil de préparation d'aliment pour animaux selon la revendication 1, comprenant :
- des moyens de stockage d'au moins un liquide,
- des moyens de stockage d'au moins un aliment déshydraté,
- une enceinte de mélange,
- des moyens de dosage et de transfert d'une première quantité prédéterminée dudit au moins un liquide vers l'enceinte de mélange,
- des moyens de dosage et de transfert d'une deuxième quantité prédéterminée dudit au moins un aliment déshydraté vers l'enceinte de mélange,
- des moyens de mélange, pour brasser et mélanger ledit au moins un liquide avec ledit au moins un aliment déshydraté pendant une phase de mélange, pour former une ration alimentaire sous forme de pâte,
- des moyens de distribution, agencés pour distribuer la ration alimentaire sous forme de pâte depuis l'enceinte de mélange dans un récipient, pendant une phase de distribution. L'appareil selon la présente invention est agencé pour préparer automatiquement, depuis des ingrédients de base (dont au moins un aliment déshydraté et au moins un liquide tel que de l'eau) une ration alimentaire sous forme de pâte, qui est plus appétissante pour les animaux que des aliments secs tels que des croquettes. L'aliment déshydraté peut être sous forme de poudre, de granulés, de flocons, de paillettes, de croquettes.

L'appareil est donc agencé pour distribuer une pâte, et typiquement, une telle pâte présente une consistance pâteuse, mais non liquide (même comparée à du miel ou de la mélasse qui finissent par s'étaler). Par exemple si on place un échantillon de la pâte préparée dans un cylindre en polycarbonate ou en verre de 50mm de diamètre et de 50mm de haut de sorte à le remplir, et que l'on enfonce une sonde en acier inoxydable de 30mm de diamètre à une vitesse de 1mm.s⁻¹, il faut exercer une force d'au moins 5N. En d'autres termes, la ration alimentaire préparée ne se trouve pas sous forme liquide et peut rester sous une forme tridimensionnelle sans s'écouler lorsque la pâte est distribuée dans le récipient.

On comprend qu'à l'aide de l'appareil selon l'invention, on peut préparer aisément une ration alimentaire "à la demande" et sans manipulations préalables. En effet, lorsque les moyens de stockage de liquide et d'aliment déshydraté sont remplis, il suffit de mettre en fonctionnement la machine pour fournir la ration alimentaire. On peut prévoir des volumes de stockage en liquide et en aliment déshydraté suffisants pour préparer une semaine de nourriture. Par exemple, on peut prévoir de stocker 6 litres d'eau et 2 kg d'aliments déshydratés.

Un autre avantage de l'appareil est qu'il peut recevoir de l'aliment déshydraté, et l'utilisateur peut alors choisir l'aliment déshydraté le mieux adapté à son animal.

Avantageusement, l'appareil de préparation d'aliment pour animaux comprend au moins une partie mobile par rapport à l'enceinte de mélange, et
- agencée pour être entraînée selon un mouvement de mélange lors de la phase de mélange de la ration alimentaire, pour être utilisée comme moyens de mélange,
- agencée pour être entraînée selon un mouvement de refoulement lors de la phase de distribution pour être utilisée comme moyens de distribution,
et au moins une composante du mouvement de refoulement est de sens contraire à une composante du mouvement de mélange. La partie mobile sert à mélanger le liquide et l'aliment déshydraté et ensuite à distribuer la pâte préparée : il y a donc économie de moyens, et simplification de l'appareil, puisqu'un même organe réalise deux fonctions différentes dans un cycle de préparation.

Avantageusement, l'appareil de préparation d'aliment pour animaux comprend au moins une partie mobile en rotation par rapport à l'enceinte de mélange, et agencée pour être entraînée en rotation selon un mouvement de mélange lors de la phase de mélange de la ration alimentaire pour être utilisée comme moyens de mélange,
et ladite au moins une partie mobile est agencée pour être entraînée en rotation selon un mouvement de refoulement de sens opposé au mouvement de mélange, lors de la phase de distribution de la ration alimentaire, pour être utilisée comme moyens de distribution. La partie mobile sert à mélanger le liquide et l'aliment déshydraté et ensuite à distribuer la pâte préparée : il y a donc économie de moyens, et simplification de l'appareil, puisqu'un même organe réalise deux fonctions différentes dans un cycle de préparation.

Avantageusement, l'enceinte de mélange, et/ou le récipient, et/ou les moyens de mélange, et/ou les moyens de distribution sont amovibles par rapport à l'appareil. On peut ainsi aisément démonter et nettoyer l'appareil.

Avantageusement, ladite au moins une partie mobile comprend un moyeu, au moins une pale et au moins une branche reliant ladite au moins une pale au moyeu,
ladite au moins une pale comprend au moins :
- un premier bord d'attaque agencé pour mélanger ledit au moins un liquide avec ledit au moins un moins un aliment déshydraté lors du mouvement de mélange,
- un deuxième bord d'attaque agencé pour repousser la pâte vers une périphérie de la partie mobile lors du mouvement de refoulement. Le premier bord d'attaque peut être orienté pour ramener le mélange vers l'intérieur de l'enceinte de mélange, c'est-à-dire provoquer un mouvement des aliments avec au moins une composante centripète. En d'autres termes, le premier bord d'attaque de la pale peut former une lame avec un bord ou chanfrein orienté vers l'intérieur de l'enceinte de mélange. De plus, le deuxième bord d'attaque peut être orienté pour pousser le mélange vers l'extérieur de l'enceinte de mélange, c'est-à-dire provoquer un mouvement des aliments avec au moins une composante centrifuge. En d'autres termes, le deuxième bord d'attaque de la pale peut former une lame avec un bord ou chanfrein orienté vers l'extérieur de l'enceinte de mélange.

Avantageusement, ladite au moins une branche comprend au moins :
- une première face d'attaque agencée pour racler l'enceinte de mélange lors du mouvement de mélange et formant une pointe au niveau d'une jonction avec ladite au moins une pale,
- une deuxième face d'attaque agencée pour racler l'enceinte de mélange lors du mouvement de refoulement et formant un arrondi de fuite au niveau d'une jonction avec ladite au moins une pale. La pointe formée entre la première face d'attaque de la branche et la pale est agencée pour ramener le mélange vers l'intérieur de l'enceinte de mélange, tandis que le bord de fuite arrondi formé entre la deuxième face d'attaque de la branche et la pale est agencé pour pousser le mélange vers l'extérieur de l'enceinte de mélange

Avantageusement, l'appareil de préparation d'aliment pour animaux comprend un dispositif d'ouverture d'un orifice de distribution de l'enceinte de mélange, et il est prévu un mécanisme de déverrouillage du dispositif d'ouverture, commandé par ladite au moins une partie mobile, ou un organe d'entraînement de cette dernière, lorsqu'elle est mise en mouvement de refoulement. Autrement dit, l'appareil comprend un organe moteur agencé pour entraîner les moyens de mélange selon le mouvement de mélange, et ce faisant, maintient l'orifice de distribution fermé. Dès que l'organe moteur change de sens d'entraînement (pour alors entraîner les moyens de distribution selon le mouvement de distribution opposé au mouvement de mélange), alors cela déverrouille le dispositif d'ouverture de l'orifice de distribution.

Avantageusement, les moyens de stockage dudit au moins un liquide forment un socle agencé pour soutenir l'appareil de préparation d'aliment pour animaux et le récipient dans lequel est distribuée la ration alimentaire. Cette mise en œuvre permet de surélever l'appareil et surtout le récipient, pour le confort de l'animal qui n'a pas à baisser la tête jusqu'au sol pour se nourrir.

Avantageusement, les moyens de dosage et de transfert d'une première quantité prédéterminée dudit au moins un liquide vers l'enceinte de mélange sont agencés pour laisser un volume prédéterminé de liquide dans les moyens de stockage dudit au moins un liquide. Un tel volume d'eau qui reste constamment sous l'appareil permet de le lester et de stabiliser ainsi l'appareil. On peut prévoir également des pieds avec des patins anti dérapants.

Avantageusement, les moyens de dosage et de transfert d'une première quantité prédéterminée dudit au moins un liquide vers l'enceinte de mélange comprennent une buse d'aspiration de liquide, agencée à une distance prédéterminée du fond des moyens de stockage dudit au moins un liquide.

Avantageusement, les moyens de dosage et de transfert d'une deuxième quantité prédéterminée dudit au moins un aliment déshydraté comprennent au moins une vis sans fin accouplée à un moteur. Une telle vis sans fin permet de doser précisément l'aliment déshydraté, en contrôlant sa vitesse de rotation et son temps de fonctionnement.

Avantageusement, l'appareil de préparation d'aliment pour animaux comprend des moyens de stockage d'au moins un additif alimentaire, et des moyens de distribution dans l'enceinte de mélange d'une troisième quantité prédéterminée dudit au moins un additif. Un tel additif permet d'adapter la préparation à l'animal, en fonction de son âge, son poids, son état de santé...

Avantageusement, l'appareil de préparation d'aliment pour animaux comprend au moins une unité d'acquisition de données biologiques et/ou physiologiques d'un animal à nourrir. Cela permet de pouvoir adapter et personnaliser la préparation en fonction de l'animal de l'utilisateur.

Avantageusement, l'unité d'acquisition est agencée pour recevoir les données biologiques et/ou physiologiques par liaison sans fil, par exemple par onde radio, ou infra-rouge. On peut envisager que l'unité d'acquisition puisse établir une communication avec un appareil électronique portable tel qu'un téléphone ou smartphone, ou une balance, par radio fréquence (de type wifi ou Bluetooth ®). Il est alors possible de former un système de suivi de la santé de l'animal, avec adaptation de la ration alimentaire (poids, composition) en fonction des informations reçues.

Les données biologiques et/ou physiologiques peuvent par exemple comprendre le poids, la taille, la race, le type d'animal, son âge, son état de santé, son sexe, si c'est une femelle qui attend des petits. Cela permet de pouvoir adapter et personnaliser la préparation en fonction de l'animal de l'utilisateur.

Avantageusement, l'appareil de préparation d'aliment pour animaux comprend au moins une unité de commande agencée pour commander les moyens de dosage et de transfert d'une première quantité prédéterminée dudit au moins un liquide, et/ou les moyens de dosage et de transfert d'une deuxième quantité prédéterminée dudit au moins un aliment déshydraté, en fonction des données biologiques et/ou physiologiques de l'animal. On peut aussi prévoir de faire fonctionner l'appareil à des instants précis de la journée, sans intervention manuelle de l'utilisateur.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un appareil selon la présente invention,
- la figure 2 représente une vue en perspective d'une variante de l'appareil de la figure 1,
- la figure 3 représente une vue en perspective d'une partie mobile agencée pour former des moyens de mélange et des moyens de distribution de l'appareil de la figure 1 ou 2
- la figure 4 représente une vue de dessus de la partie mobile de la figure 3,
- la figure 5 représente une vue de dessous de la partie mobile de la figure 3.

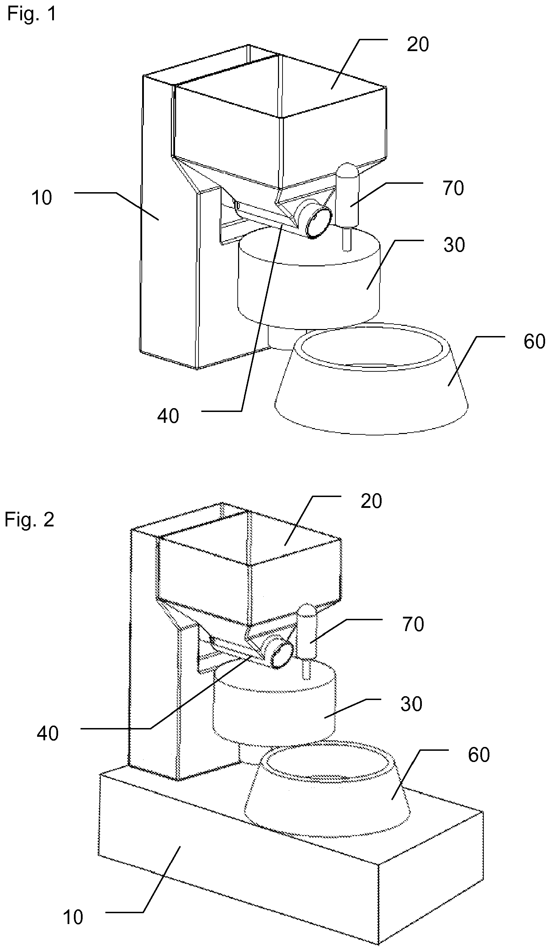

La figure 1 représente un appareil de préparation d'aliment pour animaux, comprenant des moyens de stockage d'au moins un liquide, sous la forme d'un réservoir 10, des moyens de stockage d'au moins un aliment déshydraté sous la forme d'une trémie 20, une enceinte de mélange 30, des moyens de dosage et de transfert d'une deuxième quantité prédéterminée dudit au moins un aliment déshydraté vers l'enceinte de mélange sous la forme d'une vis sans fin 40, un récipient 60 pour recevoir une ration alimentaire préparée par l'appareil.

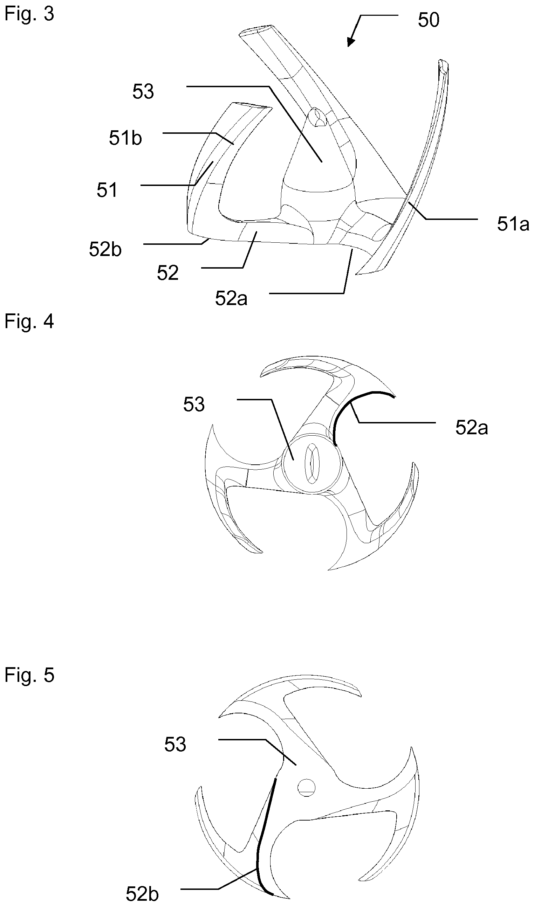

Il est aussi prévu des moyens de dosage et de transfert d'une première quantité prédéterminée dudit au moins un liquide vers l'enceinte de mélange sous la forme d'une pompe (non visible); des moyens de mélange, agencés au moins temporairement dans l'enceinte de mélange, pour brasser et mélanger ledit au moins un liquide avec ledit au moins un aliment déshydraté pendant une phase de mélange, pour former une ration alimentaire sous forme de pâte, sous forme d'une partie mobile 50 visible figures 3 à 5; et des moyens de distribution, agencés pour distribuer la ration alimentaire sous forme de pâte depuis l'enceinte de mélange dans un récipient, également sous la forme de la partie mobile 50.

La trémie 20 est donc agencée pour contenir un aliment déshydraté sous forme de paillettes, de poudre, ou de grains, pour être mélangé dans l'enceinte de mélange 30 avec de l'eau initialement contenue dans le réservoir 10. A cet effet, l'appareil comprend donc une pompe agencée pour pomper l'eau du réservoir 10 et la transporter dans l'enceinte de mélange. La vis sans fin 40 est quant à elle prévue pour ponctionner de l'aliment déshydraté dans la trémie 20, et le faire chuter dans l'enceinte de mélange.

Afin de préparer une ration alimentaire homogène, il est prévu de doser aussi bien le volume d'eau que le volume d'aliment déshydraté. Pour l'eau, on peut alors envisager d'utiliser une pompe volumétrique, ou dont on connait le débit d'eau, pour la faire fonctionner pendant un temps de pompage défini. Pour l'aliment déshydraté, la vis sans fin est actionnée pendant un temps de dosage défini. Ainsi, une première quantité d'eau est versée dans l'enceinte de mélange 30, ainsi qu'une deuxième quantité d'aliment déshydraté. On comprend que la première quantité de liquide est proportionnelle à la deuxième quantité d'aliment déshydraté, pour respecter un dosage prédéterminé qui permet d'obtenir une pâte.

Ensuite, un mélange est effectué dans l'enceinte de mélange 30, afin de former une pâte avec une consistance suffisante pour pouvoir former une ration alimentaire appétissante pour l'animal. A cet effet, une partie mobile 50 (visible figures 3 à 5) tourne en rotation dans l'enceinte de mélange pendant un temps de mélange, suffisant pour obtenir une pâte sans grumeaux, par exemple au moins 5 minutes. Lors du mélange, la partie mobile 50 tourne dans un sens de rotation de mélange de manière à mixer correctement l'eau et l'aliment déshydraté.

Ensuite, la partie mobile 50 est entraînée en rotation dans un sens de rotation de refoulement, opposé au sens de rotation de mélange, afin de diriger la pâte préparée vers la paroi extérieure de l'enceinte de mélange, où est agencé un orifice de distribution, et ainsi pousser ou extruder la pâte au travers de cet orifice de distribution, pour faire tomber la pâte dans le récipient 60.

Autrement dit, la partie mobile 50 tourne dans un sens pour mélanger l'eau et l'aliment déshydraté, et au bout d'un certain temps, son moteur d'entraînement s'arrête et change de sens de rotation pour assurer la distribution de la pâte hors de l'enceinte de mélange 30. Cette particularité permet de limiter la complexité de l'appareil, ainsi que son coût de fabrication.

De plus, l'enceinte de mélange comprend un orifice de distribution, qui est fermé pendant la phase de mélange, et qui est ouvert pendant la phase de distribution. En conséquence, la partie mobile 50 est agencée pour diriger la pâte vers l'orifice de distribution, pendant la phase de distribution.

Ensuite, l'animal à qui est destinée la ration alimentaire peut directement la manger dans le récipient 60 placé sur l'appareil, ou bien l'utilisateur peut prendre le récipient 60 pour le mettre à disposition de l'animal, dans un endroit adéquat. En d'autres termes, le récipient 60 peut faire partie de l'appareil, et il peut être amovible pour permettre à l'animal de manger ailleurs qu'à proximité de l'appareil, ou pour permettre de remplir plusieurs récipients 60 si l'utilisateur possède plusieurs animaux à nourrir. On peut bien entendu prévoir un capteur de présence du récipient 60, afin de ne distribuer la pâte que si un récipient 60 est installé sur ou dans l'appareil.

Il est aussi prévu des moyens de stockage d'au moins un additif alimentaire, sous forme d'une cartouche 70, pour ajouter un additif dans l'enceinte de mélange avant ou pendant le mélange de l'eau et de l'aliment déshydraté. On peut prévoir d'ajouter notamment des vitamines, des minéraux, des médicaments, ou tout autre produit pour le bien être de l'animal. La cartouche 70 peut être une cartouche mono-dose utilisée en une seule fois, ou bien une cartouche multi-dose dont une portion seulement du contenu est ajouté pour une ration alimentaire.

Bien entendu, l'appareil comprend un organe de commande pour piloter le dosage de l'additif depuis la cartouche 70. On peut envisager un piston qui comprime une cartouche souple, ou une pompe de dosage par exemple.

La figure 2 représente une alternative de l'appareil de la figure 1, où la seule différence est au niveau du réservoir 10. En effet, celui-ci comprend une portion agencée sous l'appareil lui-même, de sorte à surélever le récipient 60, ce qui améliore le confort de l'animal car ce dernier n'a pas besoin de baisser la tête jusqu'au sol pour manger.

De plus, l'eau contenue dans le réservoir 10 de cette mise en œuvre assure une stabilité sous forme d'un socle dont le poids est celui de l'eau stockée dans le réservoir.

La figure 3 représente une vue en perspective de la partie mobile 50. Cette dernière comprend un moyeu 53 en partie centrale, et trois pales 51, chacune reliée au moyeu 53 par une branche 52.

La figure 4 représente la partie mobile 50 vue de dessus, et la figure 5 représente la partie mobile 50 vue de dessous.

Comme expliqué ci-dessus, la partie mobile 50 peut être entraînée en rotation selon un mouvement de rotation de mélange pour mélanger l'eau et l'aliment déshydraté. Ce mouvement de rotation de mélange est le sens horaire sur la figure 4 (donc anti horaire sur la figure 5).

La partie mobile peut aussi être entraînée en rotation selon un mouvement de rotation de refoulement, pour forcer la pâte à sortir de l'enceinte de mélange 30. Ce mouvement de rotation de refoulement est le sens horaire sur la figure 5 (donc anti-horaire sur la figure 4).

En conséquence, les pales 51 et les branches 52 sont asymétriques, pour réaliser une fonction différente selon le sens de rotation. A cet effet, chaque pale 51 comprend un premier bord d'attaque 51a qui est agencé pour mélanger la pâte lors d'une rotation en sens horaire (par rapport à la figure 4), et également pour ramener le mélange vers l'intérieur de l'enceinte de mélange 30. Pour assurer cette fonction, le premier bord d'attaque 51a de chaque pale 51 forme une lame dont la face extérieure est tangente au mouvement de rotation (elle est circulaire), et la face intérieure est penchée ou orientée pour diriger le mélange vers l'intérieur de l'enceinte de mélange 30.

Au niveau des branches 52, celles-ci comprennent une première face d'attaque 52a qui racle l'enceinte de mélange 30 et forme une pointe avec la pale qu'elle relie au moyeu 53. Cette pointe se conjugue avec le premier bord d'attaque 51a de la pale pour ramener le mélange vers l'intérieur de l'enceinte de mélange 30. Ainsi, la phase de mélange est efficace. On voit en gras, figure 4, la première face d'attaque 52a, en forme de croissant ou de pointe, de la branche 52 située à 1 heure environ dans le sens horaire.

En ce qui concerne le mouvement de refoulement, les pales 51 comprennent un deuxième bord d'attaque 51b, qui est agencé pour refouler la pâte vers l'extérieur de l'enceinte de mélange 30 lors d'un mouvement de rotation en sens anti-horaire (par rapport à la figure 4). La face extérieure de chaque pale 51 est donc une lame chanfreinée vers l'extérieur, pour guider la pâte vers la paroi de l'enceinte de mélange 30.

De plus, les branches 52 comprennent chacune une deuxième face d'attaque 52b, agencée pour racler l'enceinte de mélange 30, et surtout pour guider le mélange vers la périphérie de l'enceinte de mélange 30, avec un bord de fuite en arrondi avec la pale correspondante. On voit en gras figure 5 la deuxième face d'attaque 52b pour la branche située à 6 heures environ dans le sens horaire.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation d'aliment pour animaux qui comprend :
- des moyens de stockage (10) d'au moins un liquide,
- des moyens de stockage (20) d'au moins un aliment déshydraté,
- une enceinte de mélange (30),
- des moyens de dosage et de transfert d'une première quantité prédéterminée dudit au moins un liquide vers l'enceinte de mélange (30),
- des moyens de dosage et de transfert (40) d'une deuxième quantité prédéterminée dudit au moins un aliment déshydraté vers l'enceinte de mélange (30),
- des moyens de mélange (50), pour brasser et mélanger ledit au moins un liquide avec ledit au moins un aliment déshydraté pendant une phase de mélange, pour former une ration alimentaire sous forme de pâte de consistance pâteuse mais non liquide, lesdits moyens de mélange (50) comprenant au moins une partie mobile en rotation par rapport à l'enceinte de mélange (30), et agencée pour être entraînée en rotation selon un mouvement de mélange lors de la phase de mélange de la ration alimentaire,
- des moyens de distribution (50), agencés pour distribuer la ration alimentaire sous forme de pâte de consistance pâteuse mais non liquide depuis l'enceinte de mélange (30) dans un récipient (60), pendant une phase de distribution, ladite au moins une partie mobile étant agencée pour être entraînée en rotation selon un mouvement de refoulement de sens opposé au mouvement de mélange, lors de la phase de distribution de la ration alimentaire.

2. Appareil de préparation d'aliment pour animaux selon la revendication 1, dans lequel ladite au moins une partie mobile comprend un moyeu (53), au moins une pale (51) et au moins une branche (52) reliant ladite au moins une pale (51) au moyeu (53),
dans lequel ladite au moins une pale (51) comprend au moins:
- un premier bord d'attaque (51a) agencé pour mélanger ledit au moins un liquide avec ledit au moins un moins un aliment déshydraté lors du mouvement de mélange,
- un deuxième bord d'attaque (51b) agencé pour repousser la pâte vers une périphérie de la partie mobile (50) lors du mouvement de refoulement.

3. Appareil de préparation d'aliment pour animaux selon la revendication précédente, dans lequel ladite au moins une branche (52) comprend au moins :
- une première face d'attaque (52a) agencée pour racler l'enceinte de mélange (30) lors du mouvement de mélange et formant une pointe au niveau d'une jonction avec ladite au moins une pale (51),
- une deuxième face d'attaque (52b) agencée pour racler l'enceinte de mélange (30) lors du mouvement de refoulement et formant un arrondi de fuite au niveau d'une jonction avec ladite au moins une pale (51).

4. Appareil de préparation d'aliment pour animaux selon l'une des revendications précédentes, comprenant un dispositif d'ouverture d'un orifice de distribution de l'enceinte de mélange (30), dans lequel il est prévu un mécanisme de déverrouillage du dispositif d'ouverture, commandé par ladite au moins une partie mobile, ou un organe d'entraînement de cette dernière, lorsqu'elle est mise en mouvement de refoulement.

5. Appareil de préparation d'aliment pour animaux selon l'une des revendications précédentes, qui comprend des moyens de stockage (70) d'au moins un additif alimentaire, et des moyens de distribution dans l'enceinte de mélange (30) d'une troisième quantité prédéterminée dudit au moins un additif.

6. Appareil de préparation d'aliment pour animaux selon l'une des revendications précédentes, dans lequel les moyens de dosage et de transfert d'une deuxième quantité prédéterminée dudit au moins un aliment déshydraté comprennent au moins une vis sans fin (40) accouplée à un moteur.

7. Appareil de préparation d'aliment pour animaux selon l'une des revendications précédentes, qui comprend au moins une unité d'acquisition de données biologiques et/ou physiologiques d'un animal à nourrir.

8. Appareil de préparation d'aliment pour animaux selon la revendication précédente, qui comprend au moins une unité de commande agencée pour commander les moyens de dosage et de transfert d'une première quantité prédéterminée dudit au moins un liquide, et/ou les moyens de dosage et de transfert (40) d'une deuxième quantité prédéterminée dudit au moins un aliment déshydraté, en fonction des données biologiques et/ou physiologiques de l'animal.

9. Appareil de préparation d'aliment pour animaux selon l'une des revendications précédentes, dans lequel les moyens de stockage (10) dudit au moins un liquide forment un socle agencé pour soutenir l'appareil de préparation d'aliment pour animaux et le récipient (60) dans lequel est distribuée la ration alimentaire.

10. Appareil de préparation d'aliment pour animaux selon la revendication précédente, dans lequel les moyens de dosage et de transfert d'une première quantité prédéterminée dudit au moins un liquide vers l'enceinte de mélange (30) sont agencés pour laisser un volume prédéterminé de liquide dans les moyens de stockage (10) dudit au moins un liquide.

## Patentansprüche

1. Einrichtung zur Herstellung von Tierfutter, die umfasst:
- Lagermittel (10) mindestens einer Flüssigkeit,
- Lagermittel (20) mindestens eines getrockneten Futtermittels,
- eine Mischkammer (30),
- Dosier- und Übertragungsmittel einer ersten vorbestimmten Menge der mindestens einen Flüssigkeit zur Mischkammer (30),
- Dosier- und Übertragungsmittel (40) einer zweiten vorbestimmten Menge des mindestens einen getrockneten Futtermittels zur Mischkammer (30),
- Mischmittel (50), um die mindestens eine Flüssigkeit mit dem mindestens einen getrockneten Futtermittel während einer Mischphase zu verrühren und zu mischen, um eine Futterration in Form eines Teigs mit teigiger, aber nicht flüssiger Konsistenz zu bilden, wobei die Mischmittel (50) mindestens ein Teil umfassen, das in Bezug auf die Mischkammer (30) drehbeweglich ist und das eingerichtet ist, um bei der Mischphase der Futterration gemäß einer Mischbewegung in Drehung versetzt zu werden,
- Ausgabemittel (50), die eingerichtet sind, um während einer Ausgabephase die Futterration in Form eines Teigs mit teigiger, aber nicht flüssiger Konsistenz aus der Mischkammer (30) in einen Behälter (60) auszugeben, wobei das mindestens eine bewegliche Teil eingerichtet ist, um bei der Ausgabephase der Futterration gemäß einer Verdrängungsbewegung in entgegengesetzter Richtung zur Mischbewegung in Drehung versetzt zu werden.

2. Einrichtung zur Herstellung von Tierfutter nach Anspruch 1, wobei das mindestens eine bewegliche Teil eine Nabe (53), mindestens ein Schaufelblatt (51) und mindestens einen Bügel (52), der das mindestens eine Schaufelblatt (51) mit der Nabe (53) verbindet, umfasst,
wobei das mindestens eine Schaufelblatt (51) mindestens umfasst:
- eine erste Angriffskante (51a), die eingerichtet ist, um bei der Mischbewegung die mindestens eine Flüssigkeit mit dem mindestens einen getrockneten Futtermittel zu mischen,
- eine zweite Angriffskante (51b), die eingerichtet ist, um bei der Verdrängungsbewegung den Teig zu einem Umfang des beweglichen Teils (50) zurückzuschieben.

3. Einrichtung zur Herstellung von Tierfutter nach dem vorstehenden Anspruch, wobei der mindestens eine Bügel (52) mindestens umfasst:
- eine erste Angriffsseite (52a), die eingerichtet ist, um bei der Mischbewegung die Mischkammer (30) abzuschaben, und die an einer Verbindungsstelle mit dem mindestens einen Schaufelblatt (51) eine Spitze bildet,
- eine zweite Angriffsseite (52b), die eingerichtet ist, um bei der Verdrängungsbewegung die Mischkammer (30) abzuschaben, und die an einer Verbindungsstelle mit dem mindestens einen Schaufelblatt (51) eine Austrittsrundung bildet.

4. Einrichtung zur Herstellung von Tierfutter nach einem der vorstehenden Ansprüche, umfassend eine Vorrichtung zum Öffnen einer Ausgabeöffnung der Mischkammer (30), in der ein Mechanismus zum Entriegeln der Vorrichtung zum Öffnen vorgesehen ist, der von dem mindestens einen beweglichen Teil gesteuert wird, oder ein Antriebselement dieses Letzteren, wenn es in Verdrängungsbewegung gebracht wird.

5. Einrichtung zur Herstellung von Tierfutter nach einem der vorstehenden Ansprüche, die Lagermittel (70) mindestens eines Futtermittelzusatzes und Ausgabemittel in die Mischkammer (30) einer dritten vorbestimmten Menge des mindestens einen Zusatzes umfasst.

6. Einrichtung zur Herstellung von Tierfutter nach einem der vorstehenden Ansprüche, wobei die Dosier- und Übertragungsmittel einer zweiten vorbestimmten Menge des mindestens einen getrockneten Futtermittels mindestens ein Schneckengetriebe (40) umfassen, das an einen Motor gekoppelt ist.

7. Einrichtung zur Herstellung von Tierfutter nach einem der vorstehenden Ansprüche, die mindestens eine Erfassungseinheit biologischer und/oder physiologischer Daten eines zu fütternden Tieres umfasst.

8. Einrichtung zur Herstellung von Tierfutter nach dem vorstehenden Anspruch, die mindestens eine Steuereinheit umfasst, die eingerichtet ist, um die Dosier- und Übertragungsmittel einer ersten vorbestimmten Menge der mindestens einen Flüssigkeit und/oder die Dosier- und Übertragungsmittel (40) einer zweiten vorbestimmten Menge des mindestens einen getrockneten Futtermittels in Abhängigkeit von den biologischen und/oder physiologischen Daten des Tieres zu steuern.

9. Einrichtung zur Herstellung von Tierfutter nach einem der vorstehenden Ansprüche, wobei die Lagermittel (10) der mindestens einen Flüssigkeit einen Sockel bilden, der eingerichtet ist, um die Einrichtung zur Herstellung von Tierfutter und den Behälter (60), in den die Futterration ausgegeben wird, zu stützen.

10. Einrichtung zur Herstellung von Tierfutter nach dem vorstehenden Anspruch, wobei die Dosier- und Übertragungsmittel einer ersten vorbestimmten Menge der mindestens einen Flüssigkeit zur Mischkammer (30) eingerichtet sind, um ein vorbestimmtes Flüssigkeitsvolumen in den Lagemitteln (10) der mindestens einen Flüssigkeit zu belassen.

## Claims

1. Apparatus for preparing feed for animals, comprising:
- means for storing (10) at least one liquid,
- means for storing (20) at least one dehydrated feed,
- a mixing chamber (30),
- means for dosing and transferring a first predetermined amount of said at least one liquid to the mixing chamber (30),
- means for dosing and transferring (40) a second predetermined amount of said at least one dehydrated feed to the mixing chamber (30),
- mixing means (50), for stirring and mixing said at least one liquid with said at least one dehydrated feed during a mixing phase, to form a feed ration in paste form of paste but not liquid consistency, said mixing means (50) comprising at least one mobile portion in rotation with respect to the mixing chamber (30), and arranged to be rotated according to a mixing movement during the mixing phase of the feed ration,
- dispensing means (50), arranged to dispense the feed ration in paste form of paste but not liquid consistency, from the mixing chamber (30) in a container (60), during a dispensing phase, said at least one mobile portion being arranged to be rotated according to a backflow movement in the opposite direction to the mixing movement, during the dispensing phase of the feed ration.

2. Apparatus for preparing feed for animals according to claim 1, wherein said at least one mobile portion comprises an axle (53), at least one blade (51) and at least one branch (52) connecting said at least one blade (51) to the axle (53),
wherein said at least one blade (51) comprises at least:
- one first leading edge (51a) arranged to mix said at least one liquid with said at least one dehydrated feed during the mixing movement,
- a second leading edge (51b) arranged to repel the paste to a periphery of the mobile portion (50) during the backflow movement.

3. Apparatus for preparing feed for animals according to the preceding claim, wherein said at least one branch (52) comprises at least:
- one first leading face (52a) arranged to scrape the mixing chamber (30) during the mixing movement and forming a tip at the level of a junction with said at least one blade (51),
- one second leading face (52b) arranged to scrape the mixing chamber (30) during the backflow movement and forming a trailing curve at the level of a junction with said at least one blade (51).

4. Apparatus for preparing feed for animals according to one of the preceding claims, comprising a device for opening a dispensing orifice of the mixing chamber (30), wherein a mechanism for unlocking the opening device is provided, controlled by said at least one mobile portion, or a member for driving the latter, when a backflow movement is engaged.

5. Apparatus for preparing feed for animals according to one of the preceding claims, which comprises means for storing (70) at least one food additive, and means for dispensing in the mixing chamber (30) of a third predetermined amount of said at least one additive.

6. Apparatus for preparing feed for animals according to one of the preceding claims, wherein the means for dosing and transferring a second predetermined amount of said at least one dehydrated feed comprise at least one worm screw (40) coupled with a motor.

7. Apparatus for preparing feed for animals according to one of the preceding claims, which comprises at least one unit for acquiring biological and/or physiological data of an animal to be fed.

8. Apparatus for preparing feed for animals according to the preceding claim, which comprises at least one control unit arranged to control the means for dosing and transferring a first predetermined amount of said at least one liquid, and/or the means for dosing and transferring (40) a second predetermined amount of said at least one dehydrated feed, according to the biological and/or physiological data of the animal.

9. Apparatus for preparing feed for animals according to one of the preceding claims, wherein the means for storing (10) said at least one liquid form a base arranged to support the apparatus for preparing feed for animals and the container (60) wherein the feed ration is dispensed.

10. Apparatus for preparing feed for animals according to the preceding claim, wherein the means for dosing and transferring a first predetermined amount of said at least one liquid to the mixing chamber (30) are arranged to leave a predetermined volume of liquid in the means for storing (10) said at least one liquid.
